# FASCICULE DE BREVET EUROPEEN

(11) **EP 1 607 816 B1**
(45) Date de publication et mention de la délivrance du brevet: **19.10.2016**
(21) Numéro de dépôt: 05291209.4
(22) Date de dépôt: 06.06.2005
(51) Int. Cl.: G05D 1/06

(54) **Système d'aide au pilotage d'un aéronef lors de l'approche d'une piste d'atterissage en vue d'un atterissage**
System zur Steuerungshilfe eines Flugzeuges während des Rollbahnanflugs bei einer darauf folgenden Landung
System for assisting the piloting of an aircraft during the runway approach in view of a landing

(30) Priorité: 17.06.2004 FR 0406563
(43) Date de publication de la demande: 21.12.2005
(73) Titulaire: AIRBUS OPERATIONS (SAS), 31060 Toulouse (FR)
(72) Inventeur: Demortier, Jean-Pierre, 32200 Maurens (FR); Lacaze, Isabelle, 31770 Colomiers (FR); De Menorval, Jean-Louis, 31840 Aussonne (FR)
(74) Mandataire: Gevers & Orès

(56) Documents cités:
- US-A- 3 666 929
- US-A- 3 875 379
- US-A- 4 633 404
- US-A1- 2002 158 168
- US-B1- 6 317 663

## Description

La présente invention concerne un système d'aide au pilotage d'un aéronef, en particulier d'un avion de transport civil, lors de l'approche d'une piste d'atterrissage en vue d'un atterrissage.

Le document de l'art antérieur US3875379 divulgue un système connu d'aide au pilotage d'un aéronef lors de l'approche d'une piste d'atterrissage en vue d'un atterrissage.

On sait qu'environ la moitié des accidents ou incidents d'avions résulte d'un atterrissage mal contrôlé (sortie de piste, toucher trop brutal, ...).

On sait de plus que la plupart de ces accidents ou incidents auraient pu être évités à l'aide d'une approche stabilisée, c'est-à-dire avec une vitesse et une pente stabilisées à partir d'une première altitude, par exemple 500 pieds (environ 150 mètres) ou 1000 pieds (environ 300 mètres), et ceci jusqu'à une seconde altitude, par exemple 50 pieds (environ 15 mètres), à proximité directe de la piste d'atterrissage.

Une des raisons qui amènent à une approche non stabilisée est une mauvaise anticipation de la part du pilote de l'énergie à dissiper pour rejoindre le point ultime de stabilisation (à ladite première altitude).

De plus, d'autres raisons, liées notamment à des évènements extérieurs à l'aéronef amènent à des perturbations de l'approche. Par exemple, le contrôle aérien peut contribuer à des approches non stabilisées car, après avoir fourni des indications de cap et d'altitude, le contrôle aérien laisse parfois l'avion à un point proche de l'axe d'approche finale dans une configuration énergétique pas toujours idéale.

La présente invention a pour objet de remédier à ces inconvénients. Elle concerne un système d'aide au pilotage d'un aéronef lors de l'approche d'une piste d'atterrissage en vue d'un atterrissage, qui permet au pilote de rejoindre une trajectoire d'approche stabilisée lorsque cela est possible, quelle que soit sa configuration initiale (en termes de vitesse, d'altitude, de configuration aérodynamique, ...).

A cet effet, selon l'invention, ledit système du type comportant :
- des sources d'informations susceptibles d'engendrer des informations relatives à l'aéronef et à son environnement ;
- une unité de calcul ; et
- des moyens d'indication,
est remarquable en ce que :
- ladite unité de calcul détermine, à l'aide d'informations engendrées par lesdites sources d'informations, un profil de référence en énergie destiné à permettre à l'aéronef de rejoindre une trajectoire d'approche prédéterminée, s'il suit ledit profil de référence. Selon l'invention, ladite unité de calcul utilise, comme trajectoire d'approche prédéterminée, une trajectoire permettant à l'aéronef de réaliser une approche stabilisée de la piste d'atterrissage. De préférence, ledit profil de référence en énergie comprend un profil de référence en trajectoire et un profil de référence en vitesse ;
- ledit système comporte, de plus, des moyens de surveillance pour vérifier que l'aéronef suit ledit profil de référence ; et
- lesdits moyens d'indication fournissent au pilote des indications de pilotage au moins pour permettre de piloter ledit aéronef de sorte qu'il suive ledit profil de référence.

Ainsi, grâce à l'invention, le pilote dispose d'indications lui permettant de suivre ledit profil de référence en énergie (de préférence un profil de référence en trajectoire et également un profil de référence en vitesse), et ainsi de rejoindre ladite trajectoire d'approche (relative à une approche stabilisée). Ce mode pour rejoindre ladite trajectoire d'approche peut être mis en oeuvre quelle que soit la configuration initiale (en termes de vitesse, d'altitude, de configuration aérodynamique, ...) de l'aéronef. Le système conforme à l'invention aide donc le pilote à gérer l'énergie totale de l'aéronef pour suivre ledit profil de référence.

De façon avantageuse, lesdites sources d'informations engendrent des informations relatives à au moins certaines des données suivantes :
- la configuration aérodynamique de l'aéronef ;
- la position d'au moins un train d'atterrissage ;
- la position d'aérofreins ;
- la position géographique de l'aéronef ;
- la vitesse de l'aéronef ;
- la masse de l'aéronef ;
- l'altitude du seuil de la piste d'atterrissage ;
- les caractéristiques du vent ;
- la température extérieure ; et
- la pression extérieure.

En outre, avantageusement, ladite trajectoire prédéterminée présente une pente constante entre deux altitudes différentes prédéterminées, l'aéronef devant présenter une vitesse prédéterminée constante au moins à l'altitude la plus haute desdites deux altitudes pour pouvoir réaliser une approche stabilisée.

Dans un mode de réalisation préféré, ladite unité de calcul détermine un profil de référence permettant de rejoindre ladite trajectoire d'approche le plus directement possible, en minimisant la consommation et le bruit, avec une pente qui est négative ou nulle.

En outre, avantageusement :
- dans un premier mode de réalisation, ladite unité de calcul comprend au moins un modèle aérodynamique, un modèle de poussée et un modèle de performance ; et
- dans un second mode de réalisation, ladite unité de calcul comprend un ensemble de solutions possibles prédéterminées, le choix entre lesdites solutions prédéterminées étant réalisé par un moyen intégré, par exemple un réseau de neurones.

Par ailleurs, de façon avantageuse, lesdits moyens d'indication sont susceptibles de présenter sur un écran de visualisation :
- un signe caractéristique indiquant la pente à commander et un signe caractéristique indiquant la variation en cours de ladite pente ; et/ou
- un signe caractéristique indiquant la vitesse à commander et un signe caractéristique indiquant la variation en cours de ladite vitesse ; et/ou
- un signe caractéristique indiquant l'altitude à commander et un signe caractéristique indiquant la variation en cours de ladite altitude ; et/ou
- un signe caractéristique indiquant l'énergie à commander et un signe caractéristique indiquant la variation en cours de ladite énergie.

Par ailleurs, dans un mode de réalisation particulier :
- lesdits moyens d'indication sont susceptibles de présenter une information exigeant une remise des gaz, lorsque la phase d'atterrissage en cours ne peut pas être menée à terme ; et/ou
- lesdits moyens d'indication sont susceptibles de présenter des informations relatives à au moins certaines des indications suivantes :
   ▪ la modification de la configuration aérodynamique de l'aéronef ;
   ▪ la sortie d'aérofreins ; et
   ▪ la sortie d'au moins un train d'atterrissage.

Les figures du dessin annexé feront bien comprendre comment l'invention peut être réalisée. Sur ces figures, des références identiques désignent des éléments semblables.
La figure 1 est le schéma synoptique d'un système d'aide au pilotage conforme à l'invention.
La figure 2 est un graphique illustrant une trajectoire suivie par un aéronef muni d'un système d'aide au pilotage conforme à l'invention.

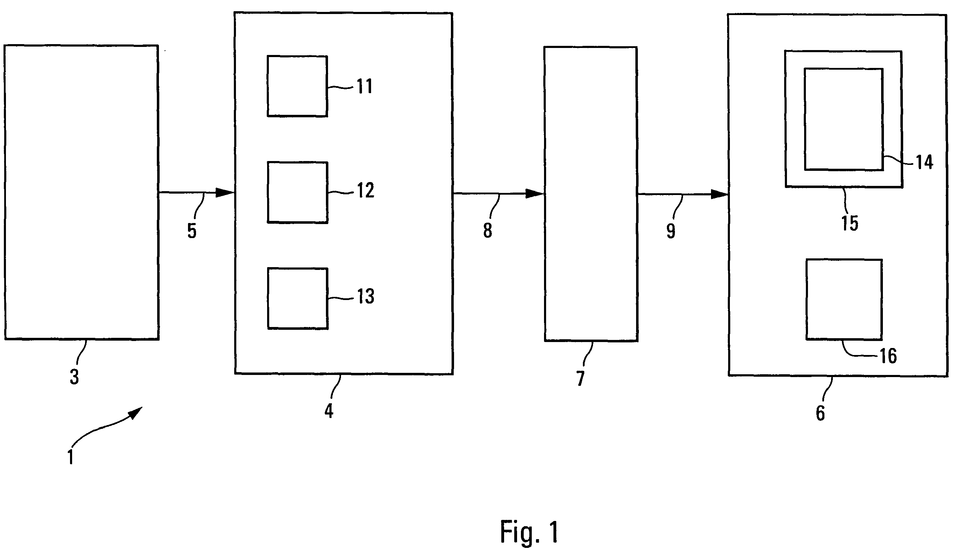

Le système 1 conforme à l'invention et représenté schématiquement sur la figure 1 est destiné à aider au pilotage d'un aéronef A, notamment d'un avion de transport civil, lors de l'approche d'une piste d'atterrissage 2 en vue d'un atterrissage.

Pour ce faire, ledit système 1 est du type comportant :
- des sources d'informations 3 susceptibles d'engendrer des informations précisées ci-dessous, relatives à l'aéronef A et à son environnement ;
- une unité de calcul 4 qui est reliée par une liaison 5 auxdites sources d'informations 3 ; et
- des moyens d'indication 6.

Selon l'invention :
- ladite unité de calcul 4 détermine, à l'aide d'informations engendrées par lesdites sources d'informations 3, un profil de référence PR en énergie qui comprend de préférence un profil de référence PR1 en trajectoire (c'est-à-dire une trajectoire de consigne à suivre) et un profil de référence PR2 en vitesse (c'est-à-dire une vitesse de consigne à respecter, lors du vol le long de ladite trajectoire de consigne) et qui est destiné à permettre à l'aéronef A de rejoindre une trajectoire d'approche TO prédéterminée, s'il satisfait ledit profil de référence PR (c'est-à-dire s'il suit ladite trajectoire de consigne à ladite vitesse de consigne) ;
- ledit système 1 comporte, de plus, des moyens de surveillance 7 qui sont reliés par une liaison 8 à l'unité de calcul 4 et par une liaison 9 aux moyens d'indication 6, pour vérifier que l'aéronef A satisfait bien ledit profil de référence PR ; et
- lesdits moyens d'indication 6 fournissent au pilote des indications de pilotage précisées ci-dessous, au moins pour permettre à ce dernier de piloter ledit aéronef A de sorte qu'il satisfasse toujours ledit profil de référence PR.

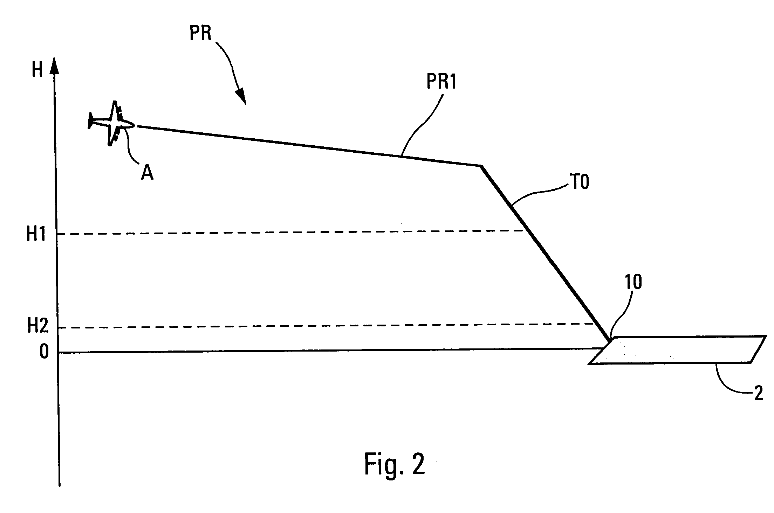

Selon l'invention, ladite unité de calcul 4 utilise, comme trajectoire d'approche prédéterminée TO, une trajectoire permettant à l'aéronef A de réaliser une approche stabilisée de la piste d'atterrissage 2, c'est-à-dire avec une vitesse et une pente stabilisées :
- à partir d'une première altitude géographique H1 (ou hauteur par rapport au sol), par exemple 500 pieds (environ 150 mètres) ou 1000 pieds (environ 300 mètres) ; et
- ceci jusqu'à une seconde altitude géographique H2, par exemple 50 pieds (environ 15 mètres), à proximité de la piste d'atterrissage 2, comme représenté sur la figure 2.

La figure 2 illustre l'approche de la piste d'atterrissage 2 dans un plan vertical montrant notamment la hauteur H de l'aéronef A par rapport au sol.

Ainsi, grâce au système 1 conforme à l'invention, le pilote dispose d'indications fournies par les moyens d'indication 6 lui permettant de suivre (satisfaire) ledit profil de référence PR (un profil de référence PR1 en trajectoire et également un profil de référence PR2 en vitesse), et ainsi de rejoindre ladite trajectoire d'approche TO (relative à une approche stabilisée). Ce mode pour rejoindre ladite trajectoire d'approche TO peut ainsi être mis en oeuvre quelle que soit la configuration initiale (en termes de vitesse, d'altitude, de configuration aérodynamique, ...) de l'aéronef A. Le système 1 conforme à l'invention aide donc le pilote à gérer l'énergie totale de l'aéronef A (pour suivre ledit profil de référence PR).

Par ailleurs, lesdites sources d'informations 3 engendrent des informations relatives à au moins certaines des données suivantes :
- des données relatives à l'aéronef A :
   ▪ la configuration aérodynamique de l'aéronef A (c'est-à-dire le cas échéant la position de becs et de volets sur les ailes de l'aéronef A) ;
   ▪ la position d'au moins un train d'atterrissage de l'aéronef A ;
   ▪ la position d'aérofreins de l'aéronef A ;
   ▪ la position géographique de l'aéronef A, donnant une information notamment par rapport à la position géographique de la piste d'atterrissage 2 ;
   ▪ la vitesse de l'aéronef A ;
   ▪ la masse de l'aéronef A ;
- des données relatives à l'aéroport :
   ▪ l'altitude du seuil 10 de la piste d'atterrissage 2 ;
   ▪ ladite trajectoire d'approche TO stabilisée ;
   ▪ l'altitude d'interception de la trajectoire d'approche TO, en cas de contraintes concernant l'interception ;
- des données relatives aux conditions atmosphériques :
   ▪ les caractéristiques du vent ;
   ▪ la température extérieure ; et
   ▪ la pression extérieure.

Dans un mode de réalisation préféré, ladite unité de calcul 4 détermine un profil de référence PR permettant de rejoindre ladite trajectoire d'approche TO le plus directement possible, en minimisant si possible la consommation et le bruit, avec une pente qui est négative ou nulle, et ceci avec une possibilité d'utiliser des aérofreins.

Dans un mode de réalisation particulier de l'invention, la détermination du profil de référence PR pour rejoindre la trajectoire d'approche TO prédéterminée peut aussi tenir compte de contraintes d'altitude liées au relief.

En outre :
- dans un premier mode de réalisation, ladite unité de calcul 4 comprend au moins un modèle aérodynamique 11, un modèle de poussée 12 et un modèle de performance 13, et met en oeuvre un algorithme approprié ; et
- dans un second mode de réalisation, ladite unité de calcul 4 comprend un ensemble de solutions possibles prédéterminées, le choix entre lesdites solutions prédéterminées étant réalisé automatiquement par un moyen approprié intégré (non représenté), par exemple un réseau de neurones.

En outre, lesdits moyens d'indication 6 sont susceptibles de présenter sur un écran de visualisation 14 d'un moyen d'affichage 15 usuel, par exemple d'un dispositif de visualisation de paramètres primaires de vol, d'un viseur tête haute ou d'un écran de navigation :
- un signe caractéristique indiquant la pente à commander pour satisfaire ledit profil de référence PR et un signe caractéristique indiquant la variation en cours de ladite pente ; et/ou
- un signe caractéristique indiquant la vitesse à commander pour satisfaire ledit profil de référence PR et un signe caractéristique indiquant la variation en cours de ladite vitesse ; et/ou
- un signe caractéristique indiquant l'altitude à commander pour satisfaire ledit profil de référence PR et un signe caractéristique indiquant la variation en cours de ladite altitude ; et/ou
- un signe caractéristique indiquant l'énergie à commander pour satisfaire ledit profil de référence PR et un signe caractéristique indiquant la variation en cours de ladite énergie.

Par ailleurs, dans un mode de réalisation particulier :
- lesdits moyens d'indication 6 sont susceptibles de présenter une information visuelle (par exemple sur l'écran de visualisation 14) et/ou sonore (par exemple à l'aide d'un moyen d'alerte sonore 16 approprié) exigeant une remise des gaz, lorsque la phase d'atterrissage en cours ne peut pas être menée à son terme ; et/ou
- lesdits moyens d'indication 6 sont susceptibles de présenter des informations visuelles (par exemple sur l'écran de visualisation 14) et/ou sonores (par exemple à l'aide dudit moyen d'alerte sonore 16), relatives à au moins certaines des indications suivantes :
   ▪ la modification de la configuration aérodynamique de l'aéronef A ;
   ▪ la sortie d'aérofreins de l'aéronef A ; et
   ▪ la sortie d'au moins un train d'atterrissage de l'aéronef A.

## Revendications

1. Système d'aide au pilotage d'un aéronef (A) lors de l'approche d'une piste d'atterrissage (2) en vue d'un atterrissage, ledit système (1) comportant :
- des sources d'informations (3) susceptibles d'engendrer des informations relatives à l'aéronef (A) et à son environnement ;
- une unité de calcul (4) qui détermine, à l'aide d'informations engendrées par lesdites sources d'informations (3), un profil de référence (PR) en énergie qui est destiné à permettre à l'aéronef (A) de rejoindre une trajectoire prédéterminée (TO), s'il suit ledit profil de référence (PR) ; et
- des moyens d'indication (6) qui fournissent au pilote des indications de pilotage au moins pour permettre de piloter ledit aéronef (A) de sorte qu'il suive ledit profil de référence (PR),
**caractérisé en ce que** :
- ledit système (1) comporte, de plus, des moyens de surveillance (7) pour vérifier que l'aéronef (A) suit ledit profil de référence (PR) ;
- ladite unité de calcul (4) utilise, comme trajectoire prédéterminée (TO), une trajectoire d'approche permettant à l'aéronef (A) de réaliser une approche stabilisée de la piste d'atterrissage (2), c'est-à-dire avec une vitesse et une pente stabilisées ;
- ladite unité de calcul (4) détermine un profil de référence (PR) qui comprend un profil de référence en trajectoire (PR1) et un profil de référence en vitesse et qui permet de rejoindre ladite trajectoire d'approche (TO) le plus directement possible ; et
- lesdits moyens d'indication (6) sont susceptibles de présenter, sur un écran de visualisation (14), au moins :
• un signe caractéristique indiquant un paramètre à commander ; et
• un signe caractéristique indiquant la variation en cours dudit paramètre.

2. Système selon la revendication 1,
**caractérisé en ce que** lesdites sources d'informations (3) engendrent des informations relatives à au moins certaines des données suivantes :
- la configuration aérodynamique de l'aéronef (A) ;
- la position d'au moins un train d'atterrissage ;
- la position d'aérofreins ;
- la position géographique de l'aéronef (A) ;
- la vitesse de l'aéronef (A) ;
- la masse de l'aéronef (A) ;
- l'altitude du seuil (10) de la piste d'atterrissage (2) ;
- les caractéristiques du vent ;
- la température extérieure ; et
- la pression extérieure.

3. Système selon l'une des revendications 1 et 2,
**caractérisé en ce que** ladite trajectoire d'approche prédéterminée (TO) présente une pente constante entre deux altitudes différentes prédéterminées (H1, H2), l'aéronef (A) devant présenter une vitesse prédéterminée constante au moins à l'altitude (H1) la plus haute desdites deux altitudes (H 1, H2) pour pouvoir réaliser une approche stabilisée.

4. Système selon l'une quelconque des revendications précédentes,
**caractérisé en ce que** ladite unité de calcul (4) détermine un profil de référence (PR) permettant de rejoindre ladite trajectoire d'approche (TO), en minimisant la consommation et le bruit, avec une pente qui est négative ou nulle.

5. Système selon l'une quelconque des revendications 1 à 4,
**caractérisé en ce que** ladite unité de calcul (4) comprend au moins un modèle aérodynamique (11), un modèle de poussée (12) et un modèle de performance (13).

6. Système selon l'une quelconque des revendications 1 à 4, **caractérisé en ce que** ladite unité de calcul (4) comprend un ensemble de solutions possibles prédéterminées, le choix entre lesdites solutions prédéterminées étant réalisé par un moyen intégré.

7. Système selon l'une quelconque des revendications précédentes,
**caractérisé en ce que** lesdits moyens d'indication (6) sont susceptibles de présenter, sur l'écran de visualisation (14), un signe caractéristique indiquant la pente à commander et un signe caractéristique indiquant la variation en cours de ladite pente.

8. Système selon l'une quelconque des revendications précédentes,
**caractérisé en ce que** lesdits moyens d'indication (6) sont susceptibles de présenter, sur l'écran de visualisation (14), un signe caractéristique indiquant la vitesse à commander et un signe caractéristique indiquant la variation en cours de ladite vitesse.

9. Système selon l'une quelconque des revendications précédentes,
**caractérisé en ce que** lesdits moyens d'indication (6) sont susceptibles de présenter, sur l'écran de visualisation (14), un signe caractéristique indiquant l'altitude à commander et un signe caractéristique indiquant la variation en cours de ladite altitude.

10. Système selon l'une quelconque des revendications précédentes,
**caractérisé en ce que** lesdits moyens d'indication (6) sont susceptibles de présenter, sur l'écran de visualisation (14), un signe caractéristique indiquant l'énergie à commander et un signe caractéristique indiquant la variation en cours de ladite énergie.

11. Système selon l'une quelconque des revendications précédentes,
**caractérisé en ce que** lesdits moyens d'indication (6) sont susceptibles de présenter une information exigeant une remise des gaz.

12. Système selon l'une quelconque des revendications précédentes,
**caractérisé en ce que** lesdits moyens d'indication (6) sont susceptibles de présenter des informations relatives à au moins certaines des indications suivantes :
- la modification de la configuration aérodynamique de l'aéronef (A) ;
- la sortie d'aérofreins ; et
- la sortie d'au moins un train d'atterrissage.

## Patentansprüche

1. Assistenzsystem zur Steuerung eines Luftfahrzeuges (A) bei der Annäherung an eine Landepiste (2) vor einer Landung, wobei das System (1) umfasst:
- Informationsquellen (3), die geeignet sind, Informationen in Bezug auf das Luftfahrzeug (A) und seine Umgebung erzeugen;
- eine Recheneinheit (4), die mithilfe der von den Informationsquellen (3) erzeugten Informationen ein Energiereferenzprofil (PR) festlegt, das dazu bestimmt ist, es dem Luftfahrzeug (A) zu gestatten, auf eine vorbestimmte Flugbahn zu kommen (TO), wenn es dem Referenzprofil (PR) folgt; und
- Anzeigemittel (6), die dem Piloten Hinweise zur Steuerung liefern, um es zumindest zu gestatten, das Luftfahrzeug (A) so zu steuern, dass es dem Referenzprofil (PR) folgt,
**dadurch gekennzeichnet, dass**:
- das System (1) außerdem Überwachungsmittel (7) umfasst, um zu überprüfen, dass das Luftfahrzeug (A) dem Referenzprofil (PR) folgt;
- die Recheneinheit (4) als vorbestimmte Flugbahn (TO) eine Anflugbahn benutzt, die es dem Luftfahrzeug (A) gestattet, eine stabilisierte Annäherung an die Landepiste (2) durchzuführen, das heißt mit einer stabilisierten Geschwindigkeit und Neigung;
- die Recheneinheit (4) ein Referenzprofil (PR) bestimmt, das ein Flugbahnreferenzprofil (PR1) und ein Geschwindigkeitsreferenzprofil umfasst, das es gestattet, so direkt wie möglich auf die Anflugbahn (TO) zu kommen; und
- die Anzeigemittel (6) geeignet sind, auf einem Bildschirm (14) wenigstens anzuzeigen:
• ein charakteristisches Zeichen, das einen Steuerungsparameter anzeigt; und
• ein charakteristisches Zeichen, welches die Abweichung im Verlauf des Parameters anzeigt.

2. System nach Anspruch 1, **dadurch gekennzeichnet, dass** die Informationsquellen (3) Informationen bezüglich wenigstens bestimmter der folgenden Daten erzeugen:
- die aerodynamische Konfiguration des Luftfahrzeuges (A);
- die Stellung wenigstens eines Fahrwerks;
- die Stellung der Bremsklappen;
- die geographische Position des Luftfahrzeuges (A);
- die Geschwindigkeit des Luftfahrzeuges (A);
- die Masse des Luftfahrzeuges (A);
- die Höhe der Schwelle (10) der Landepiste (2);
- die Winddaten;
- die Außentemperatur; und
- der Außendruck.

3. System nach einem der Ansprüche 1 und 2, **dadurch gekennzeichnet, dass** die vorbestimmte Anflugbahn (TO) eine konstante Neigung zwischen zwei unterschiedlichen vorbestimmten Höhen (H1, H2) hat, wobei das Luftfahrzeug (A) wenigstens bei der Höhe (H1), welche die höhere der beiden Höhen (H1, H2) ist, eine vorbestimmte konstante Geschwindigkeit haben muss, um einen stabilisierten Anflug durchführen zu können.

4. System nach einem der vorstehenden Ansprüche, **dadurch gekennzeichnet, dass** die Recheneinheit (4) ein Referenzprofil (PR) bestimmt, das es gestattet, auf die Anflugbahn (TO) mit einer Neigung, die negativ oder Null ist, zu kommen, wobei der Verbrauch und der Lärm minimiert wird.

5. System nach einem der Ansprüche 1 bis 4, **dadurch gekennzeichnet, dass** die Recheneinheit (4) wenigstens ein aerodynamisches Modell (11), ein Schubmodell (12) und ein Leistungsmodell (13) umfasst.

6. System nach einem der Ansprüche 1 bis 4, **dadurch gekennzeichnet, dass** die Recheneinheit (4) einen Satz von vorbestimmten möglichen Lösungen umfasst, wobei die Auswahl zwischen den vorbestimmten Lösungen durch ein integriertes Mittel ausgeführt wird.

7. System nach einem der vorstehenden Ansprüche, **dadurch gekennzeichnet, dass** die Anzeigemittel (6) geeignet sind, auf dem Bildschirm (14) ein charakteristisches Zeichen anzuzeigen, das die zu steuernde Neigung anzeigt sowie ein charakteristisches Zeichen, das die Abweichung im Verlauf der Neigung anzeigt.

8. System nach einem der vorstehenden Ansprüche, **dadurch gekennzeichnet, dass** die Anzeigemittel (6) geeignet sind, auf einem Bildschirm (14) ein charakteristisches Zeichen anzuzeigen, dass die zu steuernden Geschwindigkeit anzeigt, und ein charakteristisches Zeichen, das die Abweichung im Verlauf der Geschwindigkeit anzeigt.

9. System nach einem der vorstehenden Ansprüche, **dadurch gekennzeichnet, dass** die Anzeigemittel (6) geeignet sind, auf einem Bildschirm (14) ein charakteristisches Zeichen anzuzeigen, dass die zu steuernden Höhe anzeigt, und ein charakteristisches Zeichen, das die Abweichung im Verlauf der Höhe anzeigt.

10. System nach einem der vorstehenden Ansprüche, **dadurch gekennzeichnet, dass** die Anzeigemittel (6) geeignet sind, auf einem Bildschirm (14) ein charakteristisches Zeichen anzuzeigen, das die zu steuernde Energie anzeigt, und ein charakteristisches Zeichen, das die Abweichung im Verlauf der Energie anzeigt.

11. System nach einem der vorstehenden Ansprüche, **dadurch gekennzeichnet, dass** die Anzeigemittel (6) geeignet sind, eine Information anzuzeigen, die das Ablassen von Gasen verlangt.

12. System nach einem der vorstehenden Ansprüche, **dadurch gekennzeichnet, dass** die Anzeigemittel (6) geeignet sind, Informationen in Bezug auf wenigstens bestimmte der folgenden Hinweise anzuzeigen:
- die Änderung der aerodynamischen Konfiguration des Luftfahrzeuges (A);
- das Ausfahren der Landeklappen; und
- das Ausfahren von wenigstens einem Fahrwerk.

## Claims

1. A system for aiding the piloting of an aircraft (A) duping the approach to a runway (2) with a view to a landing, said system (1) comprising:
- information sources (3) able to provide information relating to the aircraft (A) and to its environment;
- a computation unit (4) which determines, with the aid of information provided by said information sources (3), an energy reference profile (PR) which is intended to allow the aircraft (A) to regain a predetermined trajectory (TO), if it follows said reference profile (PR); and
- means of indication (6) which supply the pilot with piloting indications at least to make it possible to pilot said aircraft (A) in such a way that it follows said reference profile (PR),
**characterized in that**:
- said system (1) furthermore comprises means of monitoring (7) for verifying that the aircraft (A) is following said reference profile (PR);
- said computation unit (4) uses, as predetermined trajectory (TO), an approach trajectory allowing the aircraft (A) to carry out a stabilized approach to the runway (2), that is to say with a stabilized speed and stabilized slope;
- said computation unit (4) determines a reference profile (PR) which comprises a trajectory reference profile (PR1) and a speed reference profile and which makes it possible to regain said approach trajectory (TO) as directly as possible;
- said means of indication (6) are able to present, on a display screen (14), at least:
▪ a characteristic sign indicating a parameter to be commanded; and
▪ a characteristic sign indicating the variation in progress of said parameter.

2. The system as claimed in claim 1,
**characterized in that** said information sources (3) provide information relating to at least certain of the following data :
- the aerodynamic configuration of the aircraft (A);
- the position of at least one landing gear;
- the position of airbrakes;
- the geographical position of the aircraft (A);
- the speed of the aircraft (A);
- the mass of the aircraft (A);
- the altitude of the threshold (10) of the runway (2) ;
- the characteristics of the wind;
- the exterior temperature; and
- the exterior pressure.

3. The system as claimed in any one of the claims 1 and 2,
**characterized in that** said predetermined approach trajectory (TO) exhibits a constant slope between two different predetermined altitudes (H1, H2), the aircraft (A) having to exhibit a predetermined constant speed at least at the higher altitude (HI) of said two altitudes (H1, H2) so as to be able to carry out a stabilized approach.

4. The system as claimed in any one of the preceding claims,
**characterized in that** said computation unit (4) determines a reference profile (PR) making it possible to regain said approach trajectory (TO), while minimizing consumption and noise, with a slope which is negative or zero.

5. The system as claimed in any one of claims 1 to 4,
**characterized in that** said computation unit (4) comprises at least one aerodynamic model (11), a thrust model (12) and a performance model (13).

6. The system as claimed in any one of claims 1 to 4,
**characterized in that** said computation unit (4) comprises a set of predetermined possible solutions, the choice between said predetermined solutions being carried out by an integrated means.

7. The system as claimed in any one of the preceding claims,
**characterized in that** said means of indication (6) are able to present, on a display screen (14), a characteristic sign indicating the slope to be commanded and a characteristic sign indicating the variation in progress of said slope.

8. The system as claimed in any one of the preceding claims,
**characterized in that** said means of indication (6) are able to present, on a display screen (14), a characteristic sign indicating the speed to be commanded and a characteristic sign indicating the variation in progress of said speed.

9. The system as claimed in any one of the preceding claims,
**characterized in that** said means of indication (6) are able to present, on a display screen (14), a characteristic sign indicating the altitude to be commanded and a characteristic sign indicating the variation in progress of said altitude.

10. The system as claimed in any one of the preceding claims,
**characterized in that** said means of indication (6) are able to present, on a display screen (14), a characteristic sign indicating the energy to be commanded and a characteristic sign indicating the variation in progress of said energy.

11. The system as claimed in any one of the preceding claims,
**characterized in that** said means of indication (6) are able to present an item of information demanding a go-around.

12. The system as claimed in any one of the preceding claims,
**characterized in that** said means of indication (6) are able to present information relating to at least certain of the following indications:
- the modification of the aerodynamic configuration of the aircraft (A) ;
- the extending of airbrakes; and
- the extending of at least one landing gear.
